# EUROPÄISCHE PATENTSCHRIFT

(11) **EP 3 464 940 B1**
(45) Veröffentlichungstag und Bekanntmachung des Hinweises auf die Patenterteilung: **02.09.2020**
(21) Anmeldenummer: 17728207.6
(22) Anmeldetag: 07.06.2017
(51) Int. Cl.: F16H 1/14, F16H 57/021

(54) **GETRIEBEANORDNUNG FÜR EIN KRAFTFAHRZEUG**
TRANSMISSION ARRANGEMENT FOR A MOTOR VEHICLE
BOÎTE DE VITESSES POUR VÉHICULE AUTOMOBILE

(30) Priorität: 07.06.2016 DE 102016209997
(43) Veröffentlichungstag der Anmeldung: 10.04.2019
(73) Patentinhaber: Audi AG, 85045 Ingolstadt (DE)
(72) Erfinder: MEIXNER, Christian, 85049 Ingolstadt (DE); TRAUTMANN, Carsten, 38442 Wolfsburg (DE)
(86) Internationale Anmeldenummer: PCT/EP2017/063777
(87) Internationale Veröffentlichungsnummer: WO 2017/211863

(56) Entgegenhaltungen:
- EP-A1- 1 683 990
- WO-A1-2015/014449
- DE-A1-102013 218 434
- GB-A- 2 386 652

## Beschreibung

Die Erfindung betrifft eine Getriebeanordnung für ein Kraftfahrzeug, mit einem Getriebegehäuse, einer ersten Ritzelwelle und einer koaxial zu der ersten Ritzelwelle angeordneten zweiten Ritzelwelle sowie mit einer ersten Getriebeausgangswelle und einer zweiten Getriebeausgangswelle, wobei die erste Ritzelwelle mittels eines ersten Lagers und die zweite Ritzelwelle mittels eines zweiten Lagers an dem Getriebegehäuse gelagert ist, und wobei auf der ersten Ritzelwelle drehfest ein mit einem auf der ersten Getriebeausgangswelle angeordneten ersten Tellerrad kämmendes erstes Ritzel und auf der zweiten Ritzelwelle drehfest ein mit einem auf der zweiten Getriebeausgangswelle angeordneten zweiten Tellerrad kämmenden zweites Ritzel angeordnet ist. So eine Getriebeanordnung ist aus der WO2015014449A bekannt.

Die Getriebeanordnung bildet vorzugsweise einen Bestandteil eines Antriebsstrangs des Kraftfahrzeugs. Über die Getriebeanordnung ist die erste Ritzelwelle mit der ersten Getriebeausgangswelle und die zweite Ritzelwelle mit der zweiten Getriebeausgangswelle wirkverbunden beziehungsweise gekoppelt. Hierzu kämmt das auf der ersten Ritzelwelle angeordnete Ritzel mit dem ersten Tellerrad der ersten Getriebeausgangswelle und das auf der zweiten Ritzelwelle angeordnete zweite Ritzel mit dem zweiten Tellerrad der zweiten Getriebeausgangswelle. Die erste Ritzelwelle und die zweite Ritzelwelle sind koaxial zueinander angeordnet. Hierzu ist die erste Ritzelwelle vorzugsweise als Hohlwelle ausgestaltet, in welcher die zweite Ritzelwelle koaxial angeordnet ist. Die zweite Ritzelwelle ist insoweit zumindest teilweise in der ersten Ritzelwelle aufgenommen.

Die beiden Getriebeausgangswellen sind vorzugsweise einer Radachse des Kraftfahrzeugs, insbesondere einer Vorderachse oder einer Hinterachse, zugeordnet. Beispielsweise dienen sie dem Anbinden mehrerer Räder der Radachse an die Ritzelwellen. Beispielsweise ist ein erstes Rad der Radachse mit der ersten Getriebeausgangswelle gekoppelt oder zumindest koppelbar und ein zweites Rad mit der zweiten Getriebeausgangswelle. Die beiden Ritzelwellen der Getriebeanordnung sind vorzugsweise mit einem Differentialgetriebe, insbesondere einem Achsdifferentialgetriebe, gekoppelt. Beispielsweise sind die Ritzelwellen über koaxial zueinander angeordnete Kardanwellen mit dem Differentialgetriebe verbunden. Aufgrund der koaxialen Anordnung der beiden Ritzelwellen fallen ihre Drehachsen ineinander.

Es kann vorgesehen sein, dass eine Drehachse der ersten Getriebeausgangswelle parallel zu einer Drehachse der zweiten Getriebeausgangswelle vorliegt, insbesondere beabstandet parallel. Die Drehachsen der Getriebeausgangswellen können jedoch auch zusammenfallen. Die Drehachsen der Getriebeausgangswellen sind bevorzugt gegenüber den Drehachsen der Ritzelwellen angewinkelt, insbesondere stehen die Drehachsen der Getriebeausgangswellen senkrecht auf einer die Drehachsen der Getriebeausgangswellen senkrecht auf den Drehachsen der Ritzelwellen.

Es ist Aufgabe der Erfindung, eine Getriebeanordnung für ein Kraftfahrzeug vorzuschlagen, welche gegenüber bekannten Getriebeanordnungen Vorteile aufweist, insbesondere eine zuverlässige Kompensation von Temperaturbeziehungsweise Wärmeausdehnungsspannungen ermöglicht.

Dies wird erfindungsgemäß mit einer Getriebeanordnung mit den Merkmalen des Anspruchs 1 erreicht.

Das erste Lager dient der Lagerung der ersten Ritzelwelle in beziehungsweise an dem Getriebegehäuse, das zweite Lager der Lagerung der zweiten Ritzelwelle in oder an dem Getriebegehäuse. Das Getriebegehäuse weist einen ersten Temperaturausdehnungskoeffizient auf beziehungsweise besteht aus einem ersten Material, welches den ersten Temperaturausdehnungskoeffizienten aufweist. Wenigstens eine der beiden Ritzelwellen, bevorzugt jedoch beide der Ritzelwellen, weisen einen zweiten Temperaturausdehnungskoeffizienten auf beziehungsweise bestehen aus einem zweiten Material, welches den zweiten Temperaturausdehnungskoeffizienten aufweist. Der zweite Temperaturausdehnungskoeffizient ist von dem ersten Temperaturausdehnungskoeffizient verschieden, beispielsweise weil das zweite Material von dem ersten Material verschieden ist. Als erstes Material kommt beispielsweise ein Leichtmetall, insbesondere Aluminium beziehungsweise eine Aluminiumlegierung und als zweites Material Eisen oder eine Eisenlegierung, beispielsweise Stahl, zum Einsatz.

Entsprechend weist das Getriebegehäuse ein anderes Temperaturausdehnungsverhalten auf als die beiden Ritzelwellen, sodass eine entsprechende Kompensation vorgesehen sein muss. Diese kann auf besonders bevorzugte Art und Weise realisiert werden, indem entweder das erste Lager oder das zweite Lager über das Temperaturausdehnungskompensationselement an das Getriebegehäuse angebunden sind. Beispielsweise liegt das Temperaturausdehnungskompensationselements zwischen dem entsprechenden Lager und dem Getriebegehäuse beziehungsweise einer Wand des Getriebegehäuses vor, sodass sich das Lager über das Temperaturausdehnungskompensationselement an dem Getriebegehäuse beziehungsweise dessen Wand abstützt.

Das Lager ist nun von dem Temperaturausdehnungskompensationselement in axialer Richtung bezüglich der Drehachse der Ritzelwellen verlagerbar.

Das Temperaturausdehnungskompensationselement weist in axialer Richtung bei unterschiedlichen Temperaturen unterschiedliche Abmessungen auf, sodass es beispielsweise bei einer ersten Temperatur das Lager weniger weit von dem Getriebegehäuse beziehungsweise der Wand fortdrängt als bei einer zweiten Temperatur oder umgekehrt bei der zweiten Temperatur das Lager weiter von dem Getriebegehäuse fortdrängt als bei der ersten Temperatur. Das Temperaturausdehnungskompensationselement besteht beispielsweise aus einem Elastomer, insbesondere einem Fluorelastomer, besonders bevorzugt Viton.

Das über das Temperaturausdehnungskompensationselement an das Getriebegehäuse angebundene Lager kann als Festlager ausgestaltet sein oder alternativ als Radiallager, welches in wenigstens einer Richtung Kräfte in axialer Richtung aufnehmen kann. Grundsätzlich ist die Ausgestaltung des Lagers jedoch beliebig.

Eine weitere Ausgestaltung der Erfindung sieht vor, dass dem ersten Lager das Temperaturausdehnungskompensationselement und dem zweiten Lager ein weiteres Temperaturausdehnungskompensationselement zugeordnet ist. Entsprechend ist also beiden Lagern jeweils ein derartiges Temperaturausgangskompensationselement zugeordnet. Das weitere Temperaturausgangskompensationselement ist vorzugsweise analog zu dem Temperaturausgangskompensationselement ausgebildet, sodass auf die entsprechenden Ausführungen verwiesen wird.
Eine weitere Ausgestaltung der Erfindung sieht vor, dass das Temperaturausdehnungskompensationselement auf der dem ersten Ritzel abgewandten Seite des ersten Lagers oder das weitere Temperaturausdehnungskompensationselement auf der dem zweiten Ritzel abgewandten Seite des zweiten Lagers angeordnet ist. Das Temperaturausdehnungskompensationselement und das weitere Temperaturausdehnungskompensationselement sind vorzugsweise auf in axialer Richtung gegenüberliegenden Seiten der Lager angeordnet. Das Temperaturausdehnungskompensationselement und das weitere Temperaturausdehnungskompensationselement nehmen insoweit beide Lager in axialer Richtung zwischen sich auf.

Im Rahmen einer weiteren Ausgestaltung der Erfindung ist vorgesehen, dass das erste Lager in Richtung des Temperaturausdehnungskompensationselements vorgespannt ist. Hierzu wird beispielsweise das erste Lager mittels einer Federkraft beaufschlagt, welche es in Richtung des Temperaturausgangskompensationselements beziehungsweise an dieses drängt. Die Federkraft kann beispielsweise an der ersten Ritzelwelle angreifen und über diese auf das erste Lager wirken. Beispielsweise ist die Federkraft derart gerichtet, dass sie die erste Ritzelwelle und die zweite Ritzelwelle beziehungsweise das erste Ritzel und das zweite Ritzel in axialer Richtung auseinanderdrängt.

Ist neben dem Temperaturausdehnungskompensationselement das weitere Temperaturausdehnungskompensationselement vorgesehen, so drängt die Federkraft beispielsweise das erste Lager in Richtung des Temperaturausdehnungskompensationselements beziehungsweise an dieses, während sie das zweite Lager in Richtung des weiteren Temperaturausdehnungskompensationselements beziehungsweise an dieses drängt. Entsprechend werden mit der auf die beiden Ritzel wirkenden Federkraft sowohl das erste Lager als auch das zweite Lager in Richtung des jeweiligen Temperaturausdehnungskompensationselements vorgespannt.

Eine weitere bevorzugte Ausführungsform der Erfindung sieht vor, dass das erste Lager und das zweite Lager eine Stützlagerung, insbesondere eine X-Lagerung oder eine O-Lagerung, oder eine Fest-Los-Lagerung bilden, und/oder dass das zweite Lager in Richtung des zweiten Ritzels oder in die von dem zweiten Ritzel abgewandte Richtung federvorgespannt ist. Die Stützlagerung zeichnet sich dadurch aus, dass die beiden Lager jeweils als Radiallager ausgestaltet sind, welche axiale Kräfte in entgegengesetzten Richtungen aufnehmen können. So begrenzt das erste Lager eine Verlagerung der ersten Ritzelwelle in axialer Richtung in eine erste Richtung und das zweite Lager eine Verlagerung der zweiten Ritzelwelle in axialer Richtung in ein der ersten Richtung entgegengesetzte zweite Richtung.

Im Falle der X-Lagerung begrenzen die Lager eine Verlagerung der Ritzelwellen beziehungsweise der Ritzel voneinander fort, während im Falle der O-Lagerung beziehungsweise der Ritzel die Verlagerung aufeinander zu begrenzt wird. Alternativ können die beiden Lager auch die Fest-Los-Lagerung bilden, wobei eines der Lager, beispielsweise das erste Lager, als Festlager und ein anderes der Lager, also beispielsweise das zweite Lager, als Loslager vorliegt. Das Festlager setzt die entsprechende Ritzelwelle in axialer Richtung fest, während das Loslager eine Verlagerung der jeweiligen Ritzelwelle in axialer Richtung zulässt.

Zusätzlich oder alternativ kann das zweite Lager federvorgespannt sein, also von einer mittels eines Federelements bewirkten Federkraft beaufschlagt sein. Die Federkraft wirkt vorzugsweise ausschließlich in axialer Richtung. Dabei kann sie in Richtung des zweiten Ritzels oder in die diesem abgewandte Richtung weisen. Beispielsweise wird die Federkraft mittels einer Tellerfeder bewirkt. Diese kann entweder auf der dem zweiten Ritzel abgewandten Seite an dem zweiten Lager angreifen oder auf der dem zweiten Ritzel zugewandten Seite. In ersterem Fall wird das zweite Lager in Richtung des zweiten Ritzels, im anderen Fall in die abgewandte Richtung federvorgespannt.

Das wenigstens eine Axiallager kann als Schrägrollenlager oder Schrägkugellager ausgeführt sein, welches in genau einer Richtung axiale Kräfte aufnehmen kann. Bevorzugt ist das Axiallager jedoch als reines Axiallager ausgestaltet. Das Axiallager kann, wie bereits angedeutet, axiale Kräfte lediglich in einer Richtung aufnahmen, bildet also eine Art Endanschlag in einer Richtung für die beiden Ritzelwellen gegeneinander, während es eine Verlagerung der Ritzelwellen in die umgekehrte Richtung zulässt.
Sind mehrere Axiallager vorgesehen, so begrenzen diese die Verlagerung der beiden Ritzelwellen vorzugsweise in entgegengesetzte axiale Richtungen. Das Axiallager oder wenigstens eines der mehreren Axiallager ist federvorgespannt. Sind mehrere Axiallager vorgesehen, so erfolgt die Federvorspannung vorzugsweise derart, dass mehrere der Lager Kräfte in axialer Richtung aufnehmen, also eine weitere Verlagerung der beiden Ritzelwellen gegeneinander unterbinden.

Eine bevorzugte weitere Ausführungsform der Erfindung sieht vor, dass die beiden Ritzelwellen mittels eines weiteren Axiallager aneinander gelagert sind, wobei eine der Ritzelwellen in axialer Richtung starr mit dem Axiallager verbunden ist und die jeweils andere der Ritzelwellen in axialer Richtung über eine Temperaturausdehnungskompensationshülse mit dem weiteren Axiallager verbunden ist oder sich an ihm abstützt. In axialer Richtung gesehen liegen also das Axiallager und die Temperaturausdehnungskompensationshülse in der Wirkverbindung zwischen den beiden Ritzelwellen vor. Das bedeutet, dass sich eine der Ritzelwellen an dem Axiallager abstützt, an welchem wiederum die Temperaturausdehnungskompensationshülse auf der der Ritzelwelle gegenüberliegenden Seite abstützt.

Die andere der Ritzelwellen liegt auf der dem Axiallager abgewandten Seite der Temperaturausdehnungskompensationshülse an dieser an. Ist das Axiallager beziehungsweise eines der mehreren Axiallager federvorgespannt, so ist die Federvorspannung vorzugsweise derart ausgeführt, dass eine der Ritzelwellen an das weitere Axiallager und die jeweils andere der Ritzelwellen an die Temperaturausdehnungskompensationshülse gedrängt wird, sodass insgesamt auch die Temperaturausdehnungskompensationshülse in Richtung des weiteren Axiallagers beziehungsweise an dieses gedrängt wird, sodass sich die Temperaturausdehnungskompensationshülse an dem weiteren Axiallager abstützt. Die Temperaturausdehnungskompensationshülse ist vorzugsweise dann vorgesehen, wenn lediglich dem ersten Lager oder dem zweiten Lager das Temperaturausdehnungskompensationselement zugeordnet ist, also das weitere Temperaturausdehnungskompensationselement nicht vorliegt.

In einer weiteren Ausführungsform der Erfindung kann vorgesehen sein, dass das Temperaturausdehnungskompensationselement einen größeren Temperaturausdehnungskoeffizient aufweist als das Getriebegehäuse, und/oder dass die Temperaturausdehnungskompensationshülse einen von dem Getriebegehäuse verschiedenen Temperaturausdehnungskoeffizient aufweist. Insbesondere bestehen hierzu das Getriebegehäuse einerseits sowie das Temperaturausdehnungskompensationselement und/oder die Temperaturausdehnungskompensationshülse andererseits aus unterschiedlichen Materialien beziehungsweise aus Materialien mit unterschiedlichen Temperaturausdehnungskoeffizienten. Die Temperaturausdehnungskoeffizienten des Temperaturausdehnungskompensationselements und des weiteren Temperaturausdehnungskompensationselements sind vorzugsweise derart gewählt, dass jedes der Kompensationselemente jeweils etwa die Hälfte der temperaturbedingten Ausdehnung des Getriebegehäuses kompensiert.

Soll die Ausdehnungskompensation mittels des Temperaturausdehnungskompensationselements und der Temperaturausdehnungskompensationshülse erzielt werden, so gilt auch hier, dass jedes der Elemente in etwa die Hälfte des Ausgleichs bewirkt. Die Temperaturausdehnungskompensationshülse weist hierzu beispielsweise einen höheren oder einen niedrigeren Temperaturausdehnungskoeffizient auf als das Getriebegehäuse. Es kann jedoch ausreichend sein, wenn die Temperaturausdehnungskompensationshülse denselben Temperaturausdehnungskoeffizient aufweist wie das Getriebegehäuse. Der höhere oder gleiche Ausdehnungskoeffizient wird beispielsweise durch eine Ausgestaltung der Temperaturausdehnungskompensationshülse aus einem Leichtmetall, beispielsweise Aluminium oder einer Aluminiumlegierung realisiert. Soll der niedrigere Temperaturausdehnungskoeffizient realisiert sein, so wird beispielsweise Invarstahl als Material der Temperaturausdehnungskompensationshülse herangezogen.

Eine Weiterbildung der Erfindung sieht vor, dass ein die Federvorspannung bewirkendes Federelement derart ausgelegt ist, dass bei einer Grenzauslegungstemperatur eine Teilkompression des Federelements vorliegt. Die Grenzauslegungstemperatur ist beispielsweise die Temperatur, welche während eines Betriebs der Getriebeanordnung maximal erwartet wird oder höher ist als diese. Während des Betriebs der Getriebeanordnung soll eine vollständige Kompression des Federelements verhindert werden, um unerwünschte Verspannungen innerhalb der Getriebeanordnung zu vermeiden. Aus diesem Grund wird das Federelement beziehungsweise dessen Federvorspannung derart ausgelegt, dass auch bei Auftreten der Grenzauslegungstemperatur lediglich eine Teilkompression des Federelements vorliegt, sodass ein gewisser Sicherheitsabstand hinsichtlich der Temperatur realisiert ist.

Schließlich kann in einer bevorzugten Ausführungsform der Erfindung vorgesehen sein, dass die beiden Getriebeausgangswellen miteinander fluchten oder achsparallel voneinander beabstandet angeordnet sind. Auf eine derartige Konfiguration wurde eingangs bereits hingewiesen.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine erste Ausführungsform einer Getriebeanordnung für ein Kraftfahrzeug,
- Figur 2: eine zweite Ausführungsform der Getriebeanordnung in zwei unterschiedlichen Varianten, sowie
- Figur 3: eine dritte Ausführungsform der Getriebeanordnung, wiederum in zwei unterschiedlichen Varianten.

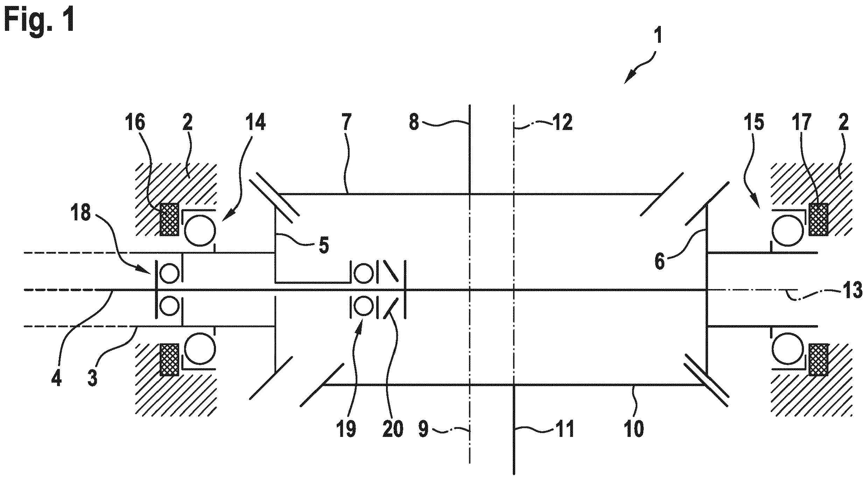

Die Figur 1 zeigt eine erste Ausführungsform einer Getriebeeinrichtung 1 für ein Kraftfahrzeug. Die Getriebeanordnung 1 weist ein Getriebegehäuse 2 auf, welches hier lediglich angedeutet ist. Weiterhin verfügt die Getriebeeinrichtung 1 über eine erste Ritzelwelle 3 sowie eine koaxial in dieser angeordnete zweite Ritzelwelle 4. Die erste Ritzelwelle 3 ist mit einem ersten Ritzel 5, die zweite Ritzelwelle 4 mit einem zweiten Ritzel 6 verbunden oder einstückig mit diesem ausgeführt. Das erste Ritzel 5 kämmt mit einem ersten Tellerrad 7, das mit einer ersten Getriebeausgangswelle 8 verbunden ist. Das erste Tellerrad 7 und die erste Getriebeausgangswelle 8 sind um eine Drehachse 9 drehbar gelagert. Das zweite Ritzel 6 kämmt dagegen mit einem zweiten Tellerrad 10, das mit einer zweiten Getriebeausgangswelle 11 verbunden ist.

Das zweite Tellerrad 10 und die zweite Getriebeausgangswelle 11 sind um eine Drehachse 12 drehbar gelagert. Die beiden Ritzelwellen 3 und 4 und mithin die beiden Ritzel 5 und 6 sind aufgrund ihrer koaxialen Anordnung um eine gemeinsame Drehachse 13 drehbar gelagert. Die Lagerung der ersten Ritzelwelle 3 erfolgt mittels eines ersten Lagers 14, die der zweiten Ritzelwelle 4 mittels eines zweiten Lagers 15. Über die Lager 14 und 15 sind die Ritzelwellen 3 und 4 an dem Getriebegehäuse 2 gelagert.

Das Getriebegehäuse 2 weist einen Temperaturausdehnungskoeffizienten auf, welcher von dem Temperaturausdehnungskoeffizient der ersten Ritzelwelle 3 und/oder der zweiten Ritzelwelle 4 verschieden ist. Entsprechend sind Maßnahmen zur Temperaturkompensation beziehungsweise der Kompensation unterschiedlicher Temperatur- beziehungsweise Wärmeausdehnungen des Getriebegehäuses 2 und der Ritzelwellen 3 und 4 notwendig. Aus diesem Grund ist das erste Lager 14 über ein Temperaturausdehnungskompensationselement 16 und das zweite Lager 15 über ein weiteres Temperaturausdehnungskompensationselement 17 mit dem Getriebegehäuse 2 verbunden. Insbesondere stützen sich die Lager 14 und 15 jeweils in axialer Richtung über das jeweilige Temperaturausdehnungskompensationselement 16 beziehungsweise 17 an dem Getriebegehäuse 2 ab. Entsprechend sind die Lager 14 und 15 in axialer Richtung bezüglich der Drehachse 13 von den Temperaturausdehnungskompensationselementen 16 und 17 verlagerbar.

Weil jedoch die Temperaturkompensation mittels der Temperaturausdehnungskompensationselemente 16 und 17 lediglich auf eine einzige Temperatur genau eingestellt werden kann, ist es vorgesehen, dass die beiden Ritzelwellen 3 und 4 mittels mehrerer Axiallager, in dem hier dargestellten Ausführungsbeispiel zwei Axiallagern 18 und 19, aneinander gelagert sind. Die Axiallager 18 und 19 begrenzen eine Verlagerung der Ritzelwellen 3 und 4 in axialer Richtung gegeneinander in jeweils entgegengesetzten Richtungen. Das Axiallager 19 ist dabei mittels eines Federelements 20 federvorgespannt. Das Federelement 20 liegt vorzugsweise als Tellerfeder vor. Es stützt sich an der zweiten Ritzelwelle 4 ab und greift auf seiner der Ritzelwelle 4 abgewandten Seite an dem Axiallager 19 an, welches sich seinerseits in axialer Richtung an der ersten Ritzelwelle 3 abstützt.

Das Federelement 20 bewirkt insoweit eine Federkraft in axialer Richtung, welche die beiden Ritzel 5 und 6 auseinanderdrängt, sodass die beiden Lager 14 und 15 in axialer Richtung nach außen vorgespannt sind. Insbesondere ist das Federelement 20 derart ausgelegt, dass die Ritzelwellen 3 und 4 in axialer Richtung so verlagert werden, dass das Axiallager 18 in axialer Richtung einerseits an der Ritzelwelle 3 und andererseits an der Ritzelwelle 4 anliegt.

Das Federelement 20 wirkt insoweit einer Verlagerung der Lager 14 und 15 durch die Temperaturausdehnungskompensationselemente 16 und 17 entgegen beziehungsweise bewirkt ein Rückstellen der Lager 14 und 15 bei sich verringernden Abmessungen der Temperaturausdehnungskompensationselemente 16 und 17 in axialer Richtung. Vorzugsweise ist es vorgesehen, dass die Axiallager 18 und 19 auf unterschiedlichen Seiten des ersten Ritzels 5 - in axialer Richtung gesehen - angeordnet sind.

Es ist erkennbar, dass die Ritzel 5 und 6 denselben Durchmesser aufweisen. Dies gilt ebenso für die Tellerräder 7 und 10. Dies macht es jedoch notwendig, dass die Drehachsen 9 und 12 der Tellerräder 7 und 10 beziehungsweise der Getriebeausgangswellen 8 und 11 versetzt angeordnet sind, nämlich in axialer Richtung bezüglich der Drehachse 13 beabstandet zueinander. Die Drehachsen 9 und 12 liegen insoweit parallel beabstandet zueinander vor. Vorzugsweise stehen die Drehachsen 9 und 12 zudem senkrecht auf einer die Drehachse 13 in sich aufnehmenden gedachten Ebene. Es kann auch vorgesehen sein, dass die Drehachsen 9 und 12 jeweils senkrecht auf der Drehachse 13 selbst stehen.

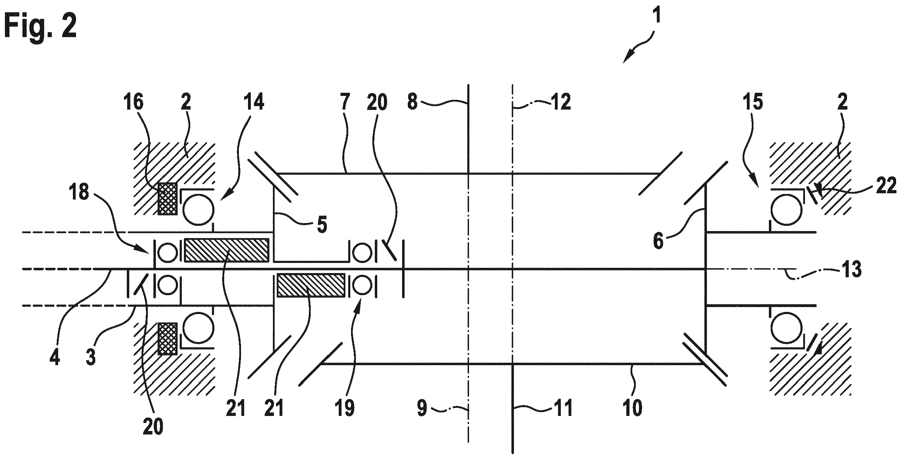

Die Figur 2 zeigt eine zweite Ausführungsform der Getriebeeinrichtung 1 in zwei unterschiedlichen Varianten, wobei eine erste der Varianten oberhalb der Drehachse 13 und eine zweite der Varianten unterhalb der Drehachse 13 dargestellt ist. Grundsätzlich wird auf die vorstehenden Ausführungen zu der ersten Ausführungsform verwiesen und nachfolgend auf die Unterschiede eingegangen. Diese liegen im Wesentlichen darin, dass zwar das Temperaturausdehnungskompensationselement 16, nicht jedoch das Temperaturausdehnungskompensationselement 17 vorgesehen ist. Die Funktion des Temperaturausdehnungskompensationselements 17 wird im Rahmen der zweiten Ausführungsform von einer Temperaturausdehnungskompensationshülse 21 übernommen.

Diese liegt für die erste Variante in axialer Richtung zwischen dem Axiallager 18 und der ersten Ritzelwelle 3, insbesondere dem ersten Ritzel 5, vor. Das bedeutet, dass sich die Temperaturausdehnungskompensationshülse 21 einerseits an der ersten Ritzelwelle 3 beziehungsweise dem ersten Ritzel 5 abstützt und andererseits an dem Axiallager 18, welches wiederum auf seiner der Temperaturausdehnungskompensationshülse 21 in axialer Richtung gesehen an der zweiten Ritzelwelle 4 anliegt beziehungsweise sich an dieser abstützt. Die Temperaturausdehnungskompensationshülse 21 hat vorzugsweise einen von dem Getriebegehäuse 2 verschiedenen Temperaturausdehnungskoeffizient, insbesondere einen höheren Temperaturausdehnungskoeffizient. Das Axiallager 19 ist wiederum mittels des Federelements 20 federvorgespannt, sodass es die erste Ritzelwelle 3 beziehungsweise das erste Ritzel 5 in axialer Richtung gegen das Axiallager 18 und dieses wiederum in axialer Richtung gesehen gegen die zweite Ritzelwelle 4 drängt.

Weiterhin ist es vorgesehen, das zweite Lager 15 mittels eines Federelements 22, welches wiederum als Tellerfeder ausgeführt sein kann, federvorzuspannen. Die Federvorspannung auf das zweite Lager 15 richtet sich dabei vorzugsweise in axialer Richtung hin zu dem ersten Lager 14. Das Federelement 22 ist derart ausgelegt, dass es auch bei Auftreten einer Grenzauslegungstemperatur nicht zu einer vollständigen Kompression des Federelements 22, sondern vielmehr lediglich zu einer Teilkompression, kommt. Das Federelement 22 weist beispielsweise eine Restfederwegbegrenzung auf, insbesondere durch Ausgestaltung mit einer blockbildenden Hülse.

Die zweite Variante der zweiten Ausführungsform unterscheidet sich von der ersten Variante lediglich darin, dass die Temperaturausdehnungskompensationshülse 21 nunmehr in axialer Richtung gesehen zwischen der ersten Ritzelwelle 3 beziehungsweise dem ersten Ritzel 5 und dem Axiallager 19 vorliegt ist, welche sich auf seiner der Temperaturausdehnungskompensationshülse 21 abgewandten Seite in axialer Richtung an der zweiten Ritzelwelle 4 abstützt. Weiterhin ist das Federelement 20 nun dem Axiallager 18 zugeordnet, sodass dieses also federvorgespannt ist. Ansonsten wird auf die Ausführungen zu der ersten Variante der zweiten Ausführungsform hingewiesen.

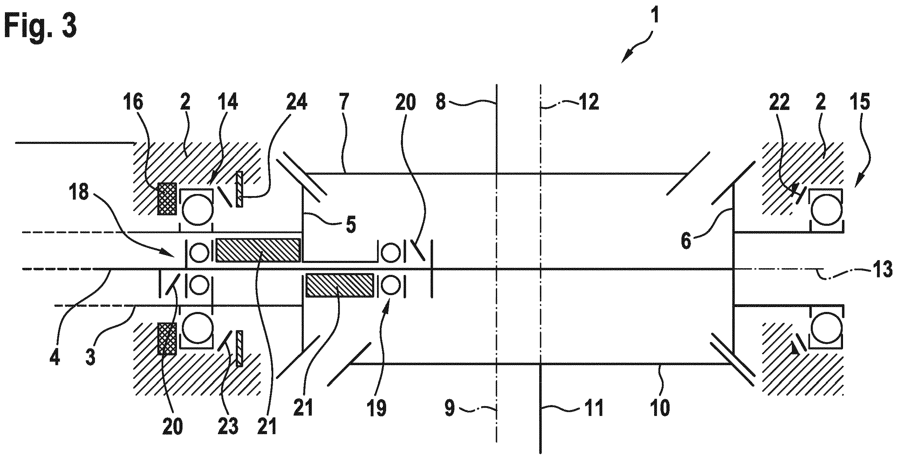

Die Figur 3 zeigt eine dritte Ausführungsform der Getriebeeinrichtung 1, wiederum in zwei Varianten. Eine erste der Varianten ist oberhalb der Drehachse 13, eine zweite unterhalb der Drehachse 13 dargestellt. Hinsichtlich der dritten Ausführungsform wird auf die Ausführungen zu der zweiten Ausführungsform hingewiesen und vollumfänglich auf diese Bezug genommen. Nachfolgend wird lediglich auf die Unterschiede hingewiesen. Abgesehen von den noch zu erläuternden Unterschieden entspricht die erste Variante der dritten Ausführungsform der ersten Variante der zweiten Ausführungsform und die zweite Variante der dritten Ausführungsform der zweiten Variante der zweiten Ausführungsform.

Die Unterschiede zu der zweiten Ausführungsform der Getriebeeinrichtung 1 liegen darin, dass das erste Lager 14 als Festlager und das zweite Lager 15 als Loslager ausgestaltet ist. Beide Lager 14 und 15 sind dabei derart ausgestaltet, dass sie Axialkräfte in beiden Richtungen aufnehmen können. Die Lager 14 und 15 sind grundsätzlich in axialer Richtung verschiebbar in dem Getriebegehäuse 2 angeordnet. Das erste Lager 14 liegt als Festlager vor, weil es fest zwischen dem Temperaturausdehnungskompensationselement 16 und einem Federelement 23 eingespannt ist, sodass es ausschließlich aufgrund von temperaturbedingten Abmessungsänderungen des Getriebegehäuses 2 und/oder des Temperaturausdehnungskompensationselements 16 in axialer Richtung verlagerbar ist. Das Federelement 23 stützt sich auf seiner in axialer Richtung dem ersten Lager 14 abgewandten Seite an dem Getriebegehäuse 2 ab, beispielsweise über ein Stützelement 24, insbesondere einem Sicherungsring beziehungsweise Sprengring.

Das zweite Lager 15 ist grundsätzlich als Loslager ausgestaltet. Es wird von dem Federelement 22 in axialer Richtung federkraftbeaufschlagt, wobei die Federkraft das zweite Lager 15 in axialer Richtung von dem ersten Lager 14 fortdrängt. Das Federelement 22 weist jedoch lediglich eine geringe Vorspannung auf. Das erste Lager 14 und das zweite Lager 15 bilden zusammen eine Fest-Los-Lagerung der Ritzelwellen 3 und 4.

Die vorstehend beschriebene Getriebeeinrichtung 1 ermöglicht eine besonders zuverlässige Kompensation von temperaturbedingten Spannungen. Insbesondere ist sie flexibel ausgestaltbar, beispielsweise lässt sie eine flexible Auswahl von Lagerkonfigurationen zu. So können das erste Lager 14 und das zweite Lager 15 als Stützlagerung ausgestaltet sein, wie dies beispielsweise anhand der ersten und zweiten Ausführungsform dargestellt ist. Auch eine Fest-Los-Lagerung gemäß der dritten Ausführungsform kann jedoch realisiert sein.

## Patentansprüche

1. Getriebeanordnung (1) für ein Kraftfahrzeug, mit einem Getriebegehäuse (2), einer ersten Ritzelwelle (3) und einer koaxial zu der ersten Ritzelwelle (3) angeordneten zweiten Ritzelwelle (4) sowie mit einer ersten Getriebeausgangswelle (8) und einer zweiten Getriebeausgangswelle (11), wobei die erste Ritzelwelle (3) mittels eines ersten Lagers (14) und die zweite Ritzelwelle (4) mittels eines zweiten Lagers (15) an dem Getriebegehäuse (2) gelagert ist, und wobei auf der ersten Ritzelwelle (3) drehfest ein mit einem auf der ersten Getriebeausgangswelle (8) angeordneten ersten Tellerrad (7) kämmendes erstes Ritzel (5) und auf der zweiten Ritzelwelle (4) drehfest ein mit einem auf der zweiten Getriebeausgangswelle (11) angeordneten zweiten Tellerrad (10) kämmendes zweites Ritzel (6) angeordnet ist, **dadurch gekennzeichnet, dass** das erste Lager (14) oder das zweite Lager (15) über ein Temperaturausdehnungskompensationselement (16) mit dem Getriebegehäuse (2) verbunden ist und in axialer Richtung bezüglich einer Drehachse (13) der Ritzelwellen (3,4) von dem Temperaturausdehnungskompensationselement (16) verlagert wird, und dass die beiden Ritzelwellen (3,4) mittels wenigstens eines Axiallagers (18,19) aneinander gelagert sind, wobei das wenigstens eine Axiallager (18,19) mittels eines Federelements (20) federvorgespannt ist, das eine Federkraft in axialer Richtung bewirkt, welche die beiden Ritzel (5,6) auseinanderdrängt, sodass die Lager (14,15) in axialer Richtung nach außen vorgespannt sind.

2. Getriebeanordnung nach Anspruch 1, **dadurch gekennzeichnet,** das dem ersten Lager (14) das Temperaturausdehnungskompensationselement (16) und dem zweiten Lager (15) ein weiteres Temperaturausdehnungskompensationselement (17) zugeordnet ist.

3. Getriebeanordnung nach einem der vorhergehenden Ansprüche, **dadurch gekennzeichnet, dass** das Temperaturausdehnungskompensationselement (16) auf der dem ersten Ritzel (5) abgewandten Seite des ersten Lagers (14) und/oder das weitere Temperaturausdehnungskompensationselement (17) auf der dem zweiten Ritzel (6) abgewandten Seite des zweiten Lagers (15) angeordnet ist.

4. Getriebeanordnung nach einem der vorhergehenden Ansprüche, **dadurch gekennzeichnet, dass** das erste Lager (14) in Richtung des Temperaturausdehnungskompensationselements (16) vorgespannt ist.

5. Getriebeanordnung nach einem der vorhergehenden Ansprüche, **dadurch gekennzeichnet, dass** das erste Lager (14) und das zweite Lager (15) eine Stützlagerung, insbesondere eine X-Lagerung oder eine O-Lagerung, oder eine Fest-Los-Lagerung bilden, und/oder dass das zweite Lager (15) in Richtung des zweiten Ritzels (6) oder in die von dem zweiten Ritzel (6) abgewandte Richtung federvorgespannt ist.

6. Getriebeanordnung nach einem der vorhergehenden Ansprüche, **dadurch gekennzeichnet, dass** die beiden Ritzelwellen (3,4) mittels eines weiteren Axiallagers (18,19) aneinander gelagert sind, wobei eine der Ritzelwellen (3,4) in axialer Richtung starr mit dem Axiallager (18,19) verbunden ist und die jeweils andere der Ritzelwellen (3,4) in axialer Richtung über eine Temperaturausdehnungskompensationshülse (21) mit dem weiteren Axiallager (18,19) verbunden ist oder sich an ihm abstützt.

7. Getriebeanordnung nach einem der vorhergehenden Ansprüche, **dadurch gekennzeichnet, dass** das Temperaturausdehnungskompensationselement (16,17) einen größeren Temperaturausdehnungskoeffizient aufweist als das Getriebegehäuse (2), und/oder dass die Temperaturausdehnungskompensationshülse (21) einen von dem Getriebegehäuse (2) verschiedenen Temperaturausdehnungskoeffizient aufweist.

8. Getriebeanordnung nach einem der vorhergehenden Ansprüche, **dadurch gekennzeichnet, dass** ein die Federvorspannung bewirkendes Federelement (22) derart ausgelegt ist, dass bei einer Grenzauslegungstemperatur eine Teilkompression des Federelements (22) vorliegt.

9. Getriebeanordnung nach einem der vorhergehenden Ansprüche, **dadurch gekennzeichnet, dass** die beiden Getriebeausgangswellen (8,11) miteinander fluchten oder achsparallel voneinander beabstandet angeordnet sind.

## Claims

1. Transmission arrangement (1) for a motor vehicle having a transmission housing (2), a first pinion shaft (3) and a second pinion shaft (4) arranged coaxially to the first pinion shaft (3) as well as with a first transmission output shaft (8) and a second transmission output shaft (11), wherein the first pinion shaft (3) is mounted by means of a first bearing (14) and the second pinion shaft (4) is mounted by means of a second bearing (15) on the transmission housing (2) and wherein on the first pinion shaft (3) is arranged non-rotationally a first pinion (5) meshing with a first crown gear (7) arranged on the first transmission output shaft (8) and on the second pinion shaft (4) is arranged non-rotationally a second pinion (6) meshing with a second crown gear (10) arranged on the second transmission output shaft (11), **characterised in that** the first bearing (14) or the second bearing (15) is connected via a thermal expansion compensation element (16) with the transmission housing (2) and is displaced by the thermal expansion compensation element (16) in axial direction with respect to a rotational axis (13) of the pinion shafts (3, 4), and that the two pinion shafts (3, 4) are supported on one another by means of at least one axial bearing (18, 19), wherein the at least one axial bearing (18, 19) is spring-pre-loaded by means of a spring element (20) which exerts a spring craft in axial direction which pushes the two pinions (5, 6) away from one another, such that the bearings (14, 15) are pre-loaded outwardly in axial direction.

2. Transmission arrangement according to claim 1, **characterised in that** the thermal expansion compensation element (16) is assigned to the first bearing (14) and a further thermal expansion compensation element (17) is assigned to the second bearing (15).

3. Transmission arrangement according to any of the preceding claims, **characterised in that** the thermal expansion compensation element (16) is arranged on the side, facing away from the first pinion (5), of the first bearing (14) and/or the further thermal expansion compensation element (17) is arranged on the side, facing away from the second pinion (6), of the second bearing (15).

4. Transmission arrangement according to any of the preceding claims, **characterised in that** the first bearing (14) is pre-loaded in the direction of the thermal expansion compensation element (16).

5. Transmission arrangement according to any of the preceding claims, **characterised in that** the first bearing (14) and the second bearing (15) form a support bearing, in particular an X-bearing or an O-bearing, or a fast-loose-bearing, and/or that the second bearing (15) is spring-pre-loaded in the direction of the second pinion (6) or in the direction facing away from the second pinion (6).

6. Transmission arrangement according to any of the preceding claims, **characterised in that** the two pinion shafts (3, 4) are mutually supported by means of a further axial bearing (18, 19), wherein one of the pinion shafts (3, 4) is connected in axial direction rigidly with the axial bearing (18, 19) and the respectively other of the pinion shafts (3, 4) is connected in axial direction via a thermal expansion compensation sleeve (21) with the further axial bearing (18, 19) or rests thereon.

7. Transmission arrangement according to any of the preceding claims, **characterised in that** the thermal expansion compensation element (16, 17) has a greater thermal expansion coefficient than the transmission housing (2), and/or that the thermal expansion compensation sleeve (21) has a thermal expansion coefficient different from the transmission housing (2).

8. Transmission arrangement according to any of the preceding claims, **characterised in that** a spring element (22) effecting the spring pre-loading is configured such that in the case of a limiting design temperature a partial compression of the spring element (22) is present.

9. Transmission arrangement according to any of the preceding claims, **characterised in that** the two transmission output shafts (8, 11) are aligned with one another or are arranged axis-parallel spaced from one another.

## Revendications

1. Dispositif d'engrenage (1) pour un véhicule automobile, avec un carter d'engrenage (2), un premier arbre de pignon (3) et un deuxième arbre de pignon (4) agencé coaxialement au premier arbre de pignon (3) ainsi qu'avec un premier arbre de sortie d'engrenage (8) et un deuxième arbre de sortie d'engrenage (11), dans lequel le premier arbre de pignon (3) est logé au moyen d'un premier palier (14) et le deuxième arbre de pignon (4) est logé au moyen d'un deuxième palier (15) au niveau du carter d'engrenage (2), et dans lequel un premier pignon (5) s'engrenant avec une première couronne de différentiel (7) agencée sur le premier arbre de sortie d'engrenage (8) est agencé solidaire en rotation sur le premier arbre de pignon (3) et un deuxième pignon (6) s'engrenant avec une deuxième couronne de différentiel (10) agencée sur le deuxième arbre de sortie d'engrenage (11) est agencé solidaire en rotation sur le deuxième arbre de pignon (4), **caractérisé en ce que** le premier palier (14) ou le deuxième palier (15) est relié au carter d'engrenage (2) par le biais d'un élément de compensation de dilatation thermique (16) et est déplacé dans la direction axiale par rapport à un axe de rotation (13) des arbres de pignon (3, 4) par l'élément de compensation de dilatation thermique (16), et que les deux arbres de pignon (3, 4) sont logés l'un contre l'autre au moyen d'au moins un palier axial (18, 19), dans lequel l'au moins un palier axial (18, 19) est précontraint par ressort au moyen d'un élément de ressort (20), qui provoque une force de ressort dans la direction axiale, laquelle pousse les deux pignons (5, 6) à s'éloigner de sorte que les paliers (14, 15) sont précontraints dans la direction axiale vers l'extérieur.

2. Dispositif d'engrenage selon la revendication 1, **caractérisé en ce que** l'élément de compensation de dilatation thermique (16) est associé au premier palier (14) et un autre élément de compensation de dilatation thermique (17) est associé au deuxième palier (15).

3. Dispositif d'engrenage selon l'une quelconque des revendications précédentes, **caractérisé en ce que** l'élément de compensation de dilatation thermique (16) est agencé sur le côté opposé au premier pignon (5) du premier palier (14) et/ou l'autre élément de compensation de dilatation thermique (17) est agencé sur le côté opposé au deuxième pignon (6) du deuxième palier (15).

4. Dispositif d'engrenage selon l'une quelconque des revendications précédentes, **caractérisé en ce que** le premier palier (14) est précontraint en direction de l'élément de compensation de dilatation thermique (16).

5. Dispositif d'engrenage selon l'une quelconque des revendications précédentes, **caractérisé en ce que** le premier palier (14) et le deuxième palier (15) forment un palier d'appui, en particulier un palier en X ou un palier en O, ou un palier fixe-lâche, et/ou que le deuxième palier (15) est précontraint par ressort en direction du deuxième pignon (6) ou dans la direction opposée au deuxième pignon (6).

6. Dispositif d'engrenage selon l'une quelconque des revendications précédentes, **caractérisé en ce que** les deux arbres de pignon (3, 4) sont logés l'un contre l'autre au moyen d'un autre palier axial (18, 19), dans lequel un des arbres de pignon (3, 4) est relié dans la direction axiale de manière rigide au palier axial (18, 19) et respectivement l'autre des arbres de pignon (3, 4) est relié dans la direction axiale par le biais d'une douille de compensation de dilatation thermique (21) à l'autre palier axial (18, 19) ou s'appuie sur celui-ci.

7. Dispositif d'engrenage selon l'une quelconque des revendications précédentes, **caractérisé en ce que** l'élément de compensation de dilatation thermique (16, 17) présente un plus grand coefficient de dilatation thermique que le carter d'engrenage (2), et/ou que la douille de compensation de dilatation thermique (21) présente un coefficient de dilatation thermique différent du carter d'engrenage (2).

8. Dispositif d'engrenage selon l'une quelconque des revendications précédentes, **caractérisé en ce qu'**un élément de ressort (22) provoquant la précontrainte par ressort est configuré de sorte que lors d'une température de conception limite, il y a une compression partielle de l'élément de ressort (22).

9. Dispositif d'engrenage selon l'une quelconque des revendications précédentes, **caractérisé en ce que** les deux arbres de sortie d'engrenage (8, 11) sont alignés entre eux ou agencés à distance l'un de l'autre parallèlement à l'axe.
